(19) Europäisches Patentamt
European Patent Office
Office européen des brevets

(11) EP 2 548 914 A1

(12) EUROPEAN PATENT APPLICATION
published in accordance with Art. 153(4) EPC

(43) Date of publication:
23.01.2013 Bulletin 2013/04

(51) Int Cl.:
$C08J$ 9/00 (2006.01)     $H01M$ 2/16 (2006.01)

(21) Application number: 11756379.1

(22) Date of filing: 17.03.2011

(86) International application number:
PCT/JP2011/056344

(87) International publication number:
WO 2011/115195 (22.09.2011 Gazette 2011/38)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 17.03.2010 JP 2010061347

(71) Applicant: Mitsubishi Plastics, Inc.
Tokyo 100-8252 (JP)

(72) Inventors:
• YAMADA, Takeyoshi
Nagahama-shi
Shiga 526-8660 (JP)
• YAMAMOTO, Miho
Nagahama-shi
Shiga 526-8660 (JP)
• USAMI, Yasushi
Nagahama-shi
Shiga 526-8660 (JP)

(74) Representative: Gille Hrabal
Patentanwälte
Brucknerstrasse 20
40593 Düsseldorf (DE)

(54) POROUS POLYPROPYLENE FILM

(57) In order to provide a porous polypropylene film in which the ratio of change in air permeability is small and the initial air-permeating property is satisfactory even under high temperature environment, a porous polypropylene film is proposed, satisfying the following conditions (1) and (2) regarding air-permeability ($Pa_1$) at 20°C and air-permeability ($Pa_2$) after heating at 95°C for one hour:
(1) The $Pa_1$ is 800 seconds/100 ml or less
(2) The ratio of change in air permeability calculated by the formula below is 120% or less

$$\text{Ratio of change in air permeability (\%)} = (Pa_2/Pa_1) \times 100$$

Fig. 1

EP 2 548 914 A1

**Description**

[Technical field]

The present invention relates to a porous film having a polypropylene series resin as the main component. Specifically, it relates to a porous film that can be used in, for instance, various separatory membranes employed for packaging use, sanitary use, animal industry use, agricultural use, architectural use or medical use, or, as a light diffuser plate, a battery separator or the like. Among them, it relates to a porous film that can be used suitably as a separator for a non-aqueous electrolyte battery.

[Background art]

Polymer porous films, which have multiple microscopic continuous holes, are being used in various fields, as separatory membranes used in the production of ultra pure water, the purification of drug solution, water treatment or the like, as waterproof moisture-permeable films used in clothing/hygiene materials or the like, or, as battery separators, or the like, used in batteries, or the like.

Secondary batteries are widely used as power sources of portable devices such as for OA (office automation), FA (factory automation), household appliances, communication devices or the like.

Among them, the use of lithium ion secondary batteries in portable devices is rising sharply, from the fact that, when a device is equipped therewith, the volume efficiency becomes high, leading to a decrease in the size and weight of the device. In addition, since lithium ion secondary batteries, being one type of non-aqueous electrolyte secondary battery, are excellent on the points of large capacity, high output, high voltage and long-term conservation ability, research and development for use as large secondary batteries are proceeding in a number of fields related to energy and environmental problems, such as solar cells and wind power generation, beginning with load leveling, UPS (uninterruptible power supply) and electric cars. Larger capacity and higher output are demanded of lithium ion secondary batteries for large secondary battery use.

In the midst of this, in addition to cylindrical batteries, which have been the majority from the past, development of batteries of the stack type, that is to say, a sandwich structure in which sheets of positive and negative electrode plates and separators are alternately stacked, which have excellent heat dissipation/stowability, has become active, in recent years.

Regarding separators being used in lithium ion batteries, a wet-type separator of ultra-high molecular weight polyethylene from solvent extraction is described in Japanese Patent Application Laid-open No. H05-009332 (Patent Reference 1) or the like. In addition, a composite dry-type separator of polypropylene and polyethylene, in which an oriented film produced with high draft is stretched in the identical direction to cause pore-opening, is described in Japanese Patent Application Laid-open No. H10-050286 (Patent Reference 2), or the like.

In addition, as porous polypropylene films with high porosity, methods of stretching a polypropylene sheet containing β-crystals are variously proposed. For instance, a microporous film of super permeable polypropylene obtained by biaxially stretching an original polypropylene film with a high β-crystal content percentage (K > 0.5) is proposed in Japanese Patent Publication No. 2509030 (Patent Reference 3). In addition, a porous polypropylene film made from polypropylene, obtained by successively biaxial-stretching polypropylene containing needle-shaped β-crystals, and production methods therefor, are proposed in international Publication No. 2002/066233 brochure (Patent Reference 4).

[Prior art references]

[Patent Reference]

[Patent Reference 1] Japanese Patent Application Laid-open No. H05-009332
[Patent Reference 2] Japanese Patent Application Laid-open No. H10-050286
[Patent Reference 3] Japanese Patent Publication No. 2509030
[Patent Reference 4] international Publication No. 2002/066233 brochure

[Summary of the invention]

[Problems to be solved by the invention]

Thermal stability of the separator is important since a separator in a lithium ion battery becomes exposed under high temperature atmosphere due to internal heat generation (reaction) of the battery and external heat generation (environment), and additionally is subjected in the battery assembly process to a drying process for separator moisture removal purposes. For instance, problems arise when the thermal stability of the separator is low, the microporous structure of the separator is deformed by thermal change, the original battery output cannot be exerted, and when a battery is used for a long period, the battery output decreases gradually due to porous structure changes in the separator over time. In particular, in the case of the stack type mentioned above, since only a slight surface pressure is applied from above and below the separator, mechanical constraining force is small compared to cylindrical batteries or the like, a thermal shrinking change of the separator tends to occur readily.

However, conventional porous polypropylene films have the risk that the pore structure becomes deformed due to shrinking behavior of the polymer, thermally or over time, closing pores and decreasing permeation performance. One of the important causes of change over time is that even if polypropylene is soft and at room temperature, it is sometimes a resin that is prone to changes over time.

The present invention was devised in view of such problems. That is to say, an object of the present invention is to provide a porous polypropylene film in which the ratio of change in air permeability is little even under high temperature environment and the initial air-permeating property is satisfactory.

[Means to solve the problems]

The present invention proposes a porous polypropylene film satisfying the following conditions (1) and (2) for air-permeability ($Pa_1$) at 20°C and air-permeability ($Pa_2$) after heating at 95°C for one hour:

(1) the $Pa_1$ is 800 seconds/100 ml or less
(2) the ratio of change in air permeability calculated by the following formula is 120% or less:

$$\text{Ratio of change in air permeability (\%)} = (Pa_2/Pa_1) \times 100$$

Since the ratio of change in air permeability is little even under high temperature environment and the early stage air-permeating property is satisfactory, the porous polypropylene film proposed by the present invention can be used adequately in particular as a separator for non-aqueous electrolyte battery use.

[Brief description of the drawings]

[Fig. 1] A cross-sectional view showing schematically a constitution example of a battery housing an example of the present porous film.
[Fig. 2] A view for describing a method for immobilizing a porous polypropylene film in an X-ray diffraction measurement.

[Modes for carrying out the invention]

Hereafter, a porous polypropylene film serving as an example of mode for carrying out the present invention will be described (hereafter referred to as " the present porous film").

<Air-permeability ($Pa_1$)>

The present porous film is characterized by an air-permeability ($Pa_1$) at 20°C of 800 seconds/100 ml or less, 600 seconds/100 ml or less being desirable, and 400 seconds/100 ml or less being all the more desirable. If the $Pa_1$ is 800 seconds/100 ml or less, the presence of continuity in the porous polypropylene film is indicated, and excellent air-permeating capability can be demonstrated. Meanwhile, regarding the lower limit, there is no definition in particular. For instance, 10 seconds/100 ml or greater is desirable, and 50 seconds/100 ml or greater is all the more desirable.

Air-permeability represents the difficulty for air to pass through in the film-thickness direction, and is expressed concretely as the number of seconds necessary for 100 ml of air to pass through the film. Therefore, a smaller numerical value means that the through-passage is facilitated, and a larger numerical value means that the through-passage is difficult. In other words, a smaller numerical value thereof means that continuity in the thickness direction of the film is satisfactory, and a larger numerical value thereof means that continuity in the thickness direction of the film is poor.

Continuity is the extent of connection of the pores in the film-thickness direction.

If air-permeability of the present porous film is low, the film can be used in a variety of applications. For instance, when using the film as a separator, low air-permeability means that the movement of lithium ions is facilitated and battery performance is excellent, which is thus desirable.

In order to bring air-permeability ($Pa_1$) at 20°C to 800 seconds/100 ml or less in the present porous film, achieving this value is possible by using polypropylene having β-crystal activity or controlling production conditions such as extrusion-molding conditions and stretching conditions.

<Ratio of change in air permeability>

For air-permeability ($Pa_1$) at 20°C and air-permeability ($Pa_2$) after heating at 95°C for one hour, the present porous film is characterized by a ratio of change in air permeability determined by the formula below of 120% or less, of which 115% or less is desirable, whereof 110% or less is further desirable. Meanwhile, there is no particular definition for the lower limit. From the fact that an amount of variation in the $Pa_1$ and the $Pa_2$ that is small is desirable, 100% or greater is desirable.

For the ratio of change in air permeability, calculation is done with the formula below:

$$\text{Ratio of change in air permeability (\%)} = (Pa_2/Pa_1) \times 100$$

If the ratio of change in air permeability is 120% or less, when the film is used as a battery separator, deterioration of the air-permeating properties of the battery separator can be suppressed in the drying process of the battery assembly process, which is desirable. In addition, also during battery use, even when heat is applied to the battery separator by internal or external heat generation, a decrease in the air-permeating properties can be prevented, allowing sufficient battery output to be exerted.

The change in air-permeability under high temperature environment is markedly promoted by shrinkages in the thickness direction, length direction and horizontal direction of the film, mainly. For instance, the porous structure formed by biaxial stretching is inferred to originate from pores deforming/closing by thermal shrinking of the porous polypropylene film.

As a method for reducing the change in air-permeability under high temperature environment, reducing the residual strain of the film in the film-fabrication stage to reduce thermal shrinking is effective. For this purpose, adjusting stretching conditions such as the stretch ratio and the stretching temperature in the production method is desirable.

<Shrink rate>

In the present porous film, the shrink rate ($S_{MD}$) in the machine direction (MD) and the shrink rate ($S_{TD}$) in the transversal direction (TD) with respect to the MD after heating at 95°C for one hour are both preferably 5.0% or less. Above all, it is all the more desirable that the $S_{MD}$ or $S_{TD}$ is 4.5% or less, of which 4.0% or less is further desirable.

In addition, the sum of the $S_{MD}$ and the $S_{TD}$ is preferably 5.0% or less.

If the $S_{MD}$, $S_{TD}$, and the sum of the $S_{MD}$ and the $S_{TD}$ are all 5.0% or less, a shrinking change is unlikely to occur even under high temperature environment, allowing a porous structure to be retained, and thus, as a result, the ratio of change in air permeability can be restrained low at a practical level.

As methods for reducing the $S_{MD}$ and $S_{TD}$, concretely, making adjustments by methods such as lowering the longitudinal stretch ratio, lowering the transversal stretch ratio, raising the stretching temperature, raising the thermosetting temperature, raising the relaxation rate or performing aging, in the production method, is effective.

<Porosity>

In the present porous film, porosity is preferably 30 to 90%, of which 40% or greater or 80% or less is all the more desirable, whereof 50% or greater or 70% or less is particularly desirable.

Porosity is an important factor to define a porous structure. If porosity is 30% or greater, continuity can be secured sufficiently, allowing the film to be turned into a porous polypropylene film with excellent air-permeating properties. Meanwhile, if porosity is 90% or less, a sufficient modulus of elasticity can be obtained, which is desirable also from the point of view of processability.

The porosity can be measured by the methods mentioned in the examples described below.

<β-crystal activity>

It is desirable that the present porous film has the β-crystal activity mentioned earlier. β-crystal activity can be considered as an indicator showing that polypropylene had generated a β-crystal in a film-shaped object prior to stretching. If the polypropylene within the film-shaped object prior to stretching had generated a β-crystal, since micropores can be formed by performing stretching later, a porous polypropylene film having air-permeating property can be obtained.

For the presence or absence of the "β-crystal activity", if a crystal-melting peak temperature derived from a β-crystal is detected by a differential scanning calorimeter, described below, or, if a diffraction peak derived from a β-crystal is detected when measuring using an X-ray diffractometer, described below, the film can be assessed as having "β-crystal activity".

Concretely, with a differential scanning calorimeter, when the porous polypropylene film is raised in temperature from 25°C to 240°C at a heating rate of 10°C/minute, then, retained for one minute, next, lowered in temperature from 240°C to 25°C at a cooling rate of 10°C/minute, then, retained for one minute, and further, raised in temperature again from 25°C to 240°C at a heating rate of 10°C/minute, if a crystal-melting peak temperature (Tmβ) derived from a β-crystal of the polypropylene is detected, the film can be assessed as having "β-crystal activity".

In addition, the degree of β-crystal activity of the porous polypropylene film can be calculated using the crystalline melting heat derived from the α-crystals (ΔHmα) and the crystalline melting heat derived from the β-crystals (ΔHmβ) of the propylene to be detected, by the following formula:

$$\text{Degree of β-crystal activity (\%)} = [\Delta Hm\beta/(\Delta Hm\beta + \Delta Hm\alpha)] \times 100$$

For instance, when the polypropylene is homopolypropylene, the degree of β-crystal activity can be calculated from the crystalline melting heat derived from the β-crystals (ΔHmβ) detected mainly in a range of 145°C or higher but less than 160°C and the crystalline melting heat derived from the α-crystals (ΔHmα) detected mainly in a range of 160°C or higher but 170°C or lower. In addition, for instance in the case of a random polypropylene in which ethylene is copolymerized at 1 to 4% by mole, the degree of β-crystal activity can be calculated from the crystalline melting heat derived from the β-crystals (AHmβ) detected mainly in a range of 120°C or higher but less than 140°C and the crystalline melting heat derived from the α-crystals (ΔHmα) detected mainly in a range of 140°C or higher but 165°C or lower.

It is desirable that the degree of β-crystal activity of the present porous film is larger, and it is desirable that the degree of β-crystal activity is 20% or greater, of which 40% or greater is further desirable, whereof 60% or greater is particularly desirable. If the degree of β-crystal activity of the present porous film is 20% or greater, it indicates that β-crystals of polypropylene can be generated numerously also within the film-shaped object prior to stretching, fine and uniform pores are formed numerously by stretching, and as a result, the film can be turned into a lithium ion separator with high mechanical strength and excellent air-permeating capability.

The upper limit value of the degree of β-crystal activity is not limited in particular. Since the higher the degree of β-crystal activity, the more effectively the effects are obtained, the closer to 100% is the more desirable.

The presence or absence of β-crystal activity can be assessed also with a diffraction profile obtained by wide-angle X-ray diffraction measurement of a porous polypropylene film that was subjected to a specific heat-treatment.

For example, for a porous polypropylene film subjected to heat-treatment at 170°C to 190°C, which are temperatures exceeding the melting point of polypropylene (polypropylene), and slowly cooled to generate/grow β-crystals, if a wide-angle X-ray measurement is carried out and a diffraction peak derived from the (300) plane of the β-crystals of the polypropylene is detected in a range of $2\theta = 16.0°$ to 16.5°, it can be assessed that there is β-crystal activity.

For details related to the β-crystal structure of polypropylene and wide-angle X-ray diffractometry, Macromol. Chem. 187, 643-652 (1986), Prog. Polym. Sci. Vol. 16, 361-404 (1991), Macromol. Symp. 89, 499-511 (1995), Macromol. Chem. 75, 134 (1964), and references cited therein can be referred. Regarding detailed evaluation methods for β-crystal activity using wide-angle X-ray diffractometry, the methods will be indicated in the examples described later.

Whether the present porous film has a monolayer structure or other porous layers are layered, the β-crystal activity can be measured in a state comprised of all layers of porous polypropylene film in both cases.

Hypothetically, when a layer containing polypropylene, or the like, is layered in addition to a layer comprising polypropylene, it is desirable that both layers have β-crystal activity.

As methods for obtaining β-crystal activity of porous layer described above, the method of not adding a substance that promotes generation of α-crystals of propylene, the method of adding a polypropylene treated so as to generate radical peroxides and the method of adding a β-crystal nucleating agent to the composition, as described in Japanese Patent No. 3739481, and the like, may be cited.

<Film-thickness>

For the film-thickness of the present porous film, 1 $\mu$m to 500 $\mu$m is desirable, of which 5 $\mu$m or greater or 300 $\mu$m or less, whereof 7 $\mu$m or greater or 100 $\mu$m or less is particularly desirable.

When using the film as a battery separator, 1 $\mu$m to 50 $\mu$m is desirable, of which 10 $\mu$m or greater or 30 $\mu$m or less is all the more desirable. When using the film as a battery separator, if the film-thickness is 1 $\mu$m or greater, and preferably 10 $\mu$m or greater, substantially necessary electric insulation can be obtained, such that for instance when a large voltage is applied, short-circuiting is unlikely, and thus safety is excellent. In addition, if the film-thickness is 50 $\mu$m or less, and preferably 30 $\mu$m or less, since the electric resistance of the porous polypropylene film can be reduced, the capabilities of the battery can be secured sufficiently.

The above physical properties of the present porous film can be adjusted suitably by the production method, the layer constitution/composition, and the like.

<Layer constitution of the porous polypropylene film>

Whether the present porous film is a monolayer or layered does not matter. Layering two layers or more is desirable.

The layer constitution of the present porous film is not limited in particular as long as at least one layer containing polypropylene (hereinafter referred to "A layer") is present. In addition, another layer (hereinafter referred to "B layer") can also be layered to an extent that does not impede the functions of the porous polypropylene film.

As the B layer, for instance, strength retention layer, heat-resistant layer (high melting temperature resin layer), shutdown layer (low-melting temperature resin layer), and the like, can be cited. For instance, when using as a battery separator, it is desirable to layer a low melting resin layer that shuts the pores under high temperature atmosphere and secures battery safety, such as described in Japanese Patent Application Laid-open No. H04-181651. Above all, it is all the more desirable to layer a layer comprising polyethylene as the main component onto the A layer.

Concretely, two-layer structures in which A layer/B layer have been layered, three-layer structure layered as A layer/B layer/A layer or B layer/A layer/B layer, and the like can be given as examples. In addition, in combination with a layer having another function, such amorphology as three-species and three layers is also possible. In this case, the layering order with the layer having another function does not matter in particular.

Further, as necessary, as the number of layers, 4 layers, 5 layers, 6 layers and 7 layers are possible.

<A layer>

As an example of the A layer described above, it is possible to cite an object or a layer obtained by extrusion-molding a resin composition containing a polypropylene series resin and a $\beta$-crystal nucleating agent to produce a pore-free film-shaped object, and performing a predetermined stretching.

Thus, polypropylene series resin and $\beta$-crystal nucleating agent will be described here.

However, the A layer mentioned above is absolutely illustrative, and the A layer is not limited to objects obtained in this manner.

(Polypropylene)

As polypropylene, for instance, homopropylene (propylene homopolymer), or, random copolymer or block copolymer of propylene and an $\alpha$-olefin such as ethylene, 1-butene, 1-pentene, 1-hexene, 1-heptene, 1-octene, 1-nonene or 1-decene, and the like, may be cited. Among these, homopolypropylene is more suitable from the point of view of maintaining mechanical strength, heat resistance, and the like, of the porous polypropylene film.

As polypropylene, it is desirable that the isotactic pentad fraction (mmmm fraction), which indicates stereoregularity, is 80 to 99%. All the more desirable is 83 to 98%, and even more desirable is 85 to 97%. If the isotactic pentad fraction is too low, there is the risk that the mechanical strength of the film decreases. Meanwhile, regarding the upper limit of the isotactic pentad fraction, it is prescribed by the upper limit value obtained industrially at the current time point. However, regarding when a resin with higher regularity is developed at the industry level in the future, there is no limitation thereto.

The isotactic pentad fraction (mmmm fraction) means a steric structure in which five methyl groups, which are side chains, are all located in the same direction with respect to a main chain of carbon-carbon bonds constituted by five arbitrary successive propylene units, or the proportion thereof.

Attribution of a signal in the methyl group region was according to A. Zambelli et al (Macromolecules 8, 687, (1975)).

As polypropylene, it is desirable that Mw/Mn, which is a parameter indicating the molecular weight distribution, is 2.0 to 10.0, more preferably 2.0 to 8.0, and even more preferably 2.0 to 6.0. The smaller the Mw/Mn, the narrower the molecular weight distribution is meant.

If Mw/Mn is less 2.0 or greater, not only problems such as extrusion-molding ability decreases do not arise, but also industrial production is also readily possible. Meanwhile, if Mw/Mn is 10.0 or lower, the low molecular weight constituents do not become excessive and the mechanical strength of the porous polypropylene film can be maintained.

Mw/Mn is a value that is measured by the GPC (gel permeation chromatography) method.

The melt flow rate (MFR) of the polypropylene is not limited in particular. In general, it is desirable that the MFR is 0.5 to 15 g/10 minutes, and 1.0 to 10 g/10 minutes is all the more desirable. If MFR is 0.5 g/10 minutes or greater, the molten viscosity of the resin during the forming process does not become too high, which can suppress a decrease in productivity. Meanwhile, if 15 g/10 minutes or lower, the mechanical strength of the porous polypropylene film can be maintained.

MFR is a value measured according to JIS K7210, under the conditions: 230°C temperature and 2.16 kg load.

Production methods for the polypropylene are not limited in particular, and well-known polymerization methods using well-known polymerization catalysts, for instance, polymerization methods using multi-site catalysts represented by Ziegler-Natta type catalysts, and single-site catalysts represented by metallocene series catalysts, and the like, may be cited.

In addition, as the polypropylene mentioned above, commercially available products can be used, such as, for instance, product names "NOVATEC PP" and "WINTEC" (manufactured by Japan Polypropylene Corporation), "VERSIFY", "NOTIO" and "TAFMER XR" (manufactured by Mitsui Chemicals Inc.), "ZELAS" and "THERMORUN" (manufactured by Mitsubishi Chemical Corporation), "Sumitomo NOBRENE" and "TAFCELENE" (manufactured by Sumitomo Chemical Co., Ltd.), "Prime TPO" (manufactured by Prime Polymer Co., Ltd.), "Adflex", "Adsyl" and "HMS-PP (PF814)" (manufactured by SunAllomer Ltd.), and "Inspire" (Dow Chemical).

(β-crystal nucleating agent)

As β-crystal nucleating agents used in the present porous film, as long as they increase the generation/growth of β-crystals of polypropylene series resin, they can be used suitably, using one species alone, and mixing and using two species or more are possible.

As β-crystal nucleating agents, for instance, amide compounds; tetraoxaspiro compound; quinacridones; iron oxides having nano-scale size; alkaline or alkaline earth metal salts of carboxylic acids represented by potassium 1,2-hydroxystearate, magnesium benzoate or magnesium succinate, magnesium phthalate and the like; aromatic sulfonic acid compounds represented by sodium benzenesulfonate or sodium naphthalenesulfonate and the like; di- or triesters of di- or tribasic carboxylic acids; phthalocyanine series pigments represented by phthalocyanine blue and the like; binary compounds comprising a constituent A that is an organic dibasic acid and a constituent B that is an oxide, a hydroxide or a salt of a Group IIA metal from the periodic table; compositions comprising a cyclic phosphorous compound and a magnesium compound, and the like, may be cited.

In addition, Japanese Patent Application Laid-open No. 2003-306585, Japanese Patent Application Laid-open No. H06-289566, and Japanese Patent Application Laid-open No. H09-194650 give descriptions regarding concrete species of nucleating agent.

As commercial products of β-crystal nucleating agent, for instance, β-crystal nucleating agent "NJSTAR NU-100" manufactured by New Japan Chemical Co., Ltd., and as concrete examples of polypropylene added with a β-crystal nucleating agent, polypropylene "Bepol B-022SP" manufactured by Aristech, polypropylene "Beta (β)-PP BE60-7032" manufactured by Borealis, polypropylene "BNX BETAPP-LN" manufactured by Mayzo, and the like, may be cited.

It is desirable that the β-crystal nucleating agent is mixed in polypropylene. In so doing, the proportion of β-crystal nucleating agent with respect to the polypropylene is preferably adjusted suitably according to the species of the β-crystal nucleating agent or the composition of the polypropylene, and the like. From such points of view, it is desirable that, with respect to 100 parts by mass of polypropylene, the content in β-crystal nucleating agent is 0.0001 to 5.0 parts by mass, of which 0.001 parts by mass or greater or 3.0 parts by mass or less is all the more desirable, whereof 0.01 parts by mass or greater or 1.0 parts by mass or less is further desirable. If 0.0001 parts by mass or greater, β-crystals of polypropylene can be generated/grown sufficiently during production, also when used as a separator, sufficient β-crystal activity can be secured, and the desired air-permeating capability is obtained. Further, if 5.0 parts by mass or less, it is not only economically advantageous, but also there is no bleeding or the like of the β-crystal nucleating agent onto the porous polypropylene film surface, which is desirable.

In addition, hypothetically, when a layer containing polypropylene, or the like, is layered in addition to a layer comprising polypropylene, the amounts of β-crystal nucleating agent added in each of the layers may be identical or may be different. The porous structure of each layer can be adjusted suitably by changing the amounts of β-crystal nucleating agent added.

(Other constituents)

In the present porous film, aside from the constituents described above, additives mixed conventionally into a resin composition can be added suitably, within ranges that do not noticeably inhibit the effects of the present invention. As the additives mentioned above, additives such as recycled resins generated from trimming losses such as edges, silica, talc, kaolin, inorganic particles such as calcium carbonate, titanium oxide, pigments such as carbon black, fire retardant, weather-resistance stabilizer, heat-resistance stabilizer, anti-static agent, molten viscosity improver, cross-linking agent, lubricant, nucleating agent, plasticizer, anti-aging agent, oxidation inhibitor, light stabilizer, ultraviolet light absorbent, neutralization agent, anti-clouding agent, anti blocking agent, slipping agent or colorants may be cited. Concretely, oxidation inhibitors described in P154 to P158 of "Plastics Compounding Agents", ultraviolet light absorbent described in P178 to P182, surfactant serving as anti-static agent described in P271 to P275, lubricant described in P283 to P294 and the like, may be cited.

<Components of the B layer>

As an example of the B layer described above, it is possible to cite a layer obtained by extrusion-molding a resin composition containing a polyethylene series resin and a porositization-promoting compound to produce a pore-free film-shaped object, and performing a predetermined stretching.
Thus, a polyethylene series resin and a porositization-promoting compound will be described here.
However, the B layer mentioned above is absolutely illustrative, and the B layer is not limited to objects obtained in this manner.

(Polyethylene)

As polyethylenes, not only homopolymeric polyethylenes such as, for instance, ultra-low density polyethylenes, low density polyethylenes, high density polyethylenes, linear low density polyethylenes, furthermore, ultra-high molecular weight polyethylenes having characteristics in the molecular weight, but also ethylene propylene copolymers, or co-polymer polyethylenes of a polyethylene and another polypropylene, may be cited. Among these, homopolymeric polyethylenes or co-polymer polyethylenes in which the amount of $\alpha$-olefin co-monomer is 2% by mole or less is desirable, and homopolymeric polyethylenes are further desirable. There is no particular limitation regarding the species of $\alpha$-olefin co-monomer.
It is desirable that the density of the polyethylene is 0.910 to 0.970 g/cm$^3$, of which 0.930 to 0.970 g/cm$^3$ is all the more desirable, and 0.940 to 0.970 g/cm$^3$ is further desirable. If the density is 0.910 g/cm$^3$ or greater, the layer can have a suitable degree of SD characteristics, which is desirable. Meanwhile, if 0.970 g/cm$^3$ or lower, it is desirable, aside from allowing the layer to have a suitable degree of SD characteristics, on the point that stretchability is maintained.
The density of the polyethylene can be measured according to JIS K7112 using the density gradient tube method.
The melt flow rate (MFR) of the polyethylene is not limited in particular. In general, MFR is preferably 0.03 to 30 g/10 minutes, and 0.3 to 10 g/10 minutes is all the more desirable. If MFR is 0.03 g/10 minutes or greater, as the molten viscosity of the resin during forming process is sufficiently low, productivity is excellent, which is desirable. Meanwhile, if 30 g/10 minutes or lower, as sufficient mechanical strength can be obtained, it is desirable.
MFR can be measured according to JIS K7210 with the conditions: 190°C temperature and 2.16 kg load.
There is no particular limitation on the polymerization catalysts of polyethylene. Any is adequate, for instance, Ziegler type catalyst, Philips type catalyst, and Kaminsky type catalyst or the like.
As polymerization methods for the polyethylene, there is one-step polymerization, two-step polymerization, or greater multi-step polymerization, and polyethylene from any methods can be used.

(Porositization-promoting compound)

Adding a porositization-promoting compound X to the polyethylene is desirable. By adding the porositization-promoting compound X, porous structures can be obtained more effectively, and controlling pore shapes and pore sizes is facilitated.
The porositization-promoting compound X is not to be limited in particular. Illustrating concretely, it is desirable that at least one species among the porositization-promoting compounds X chosen from modified polyolefin resins, alicyclic saturated hydrocarbon resins or modified bodies thereof, ethylene series copolymers or waxes, is contained. Among them, alicyclic saturated hydrocarbon resins or modified bodies thereof, ethylene series copolymers or waxes, which have greater effects regarding porositization, are all the more desirable, and waxes are further desirable from the point of view of molding ability.
Regarding alicyclic saturated hydrocarbon resins and modified bodies thereof, petroleum resins, rosin resins, terpene resins, coumarone resins, indene resins, coumarone-indene resins, and modified bodies thereof, and the like, may be cited.

The petroleum resins mentioned above include aliphatic series, aromatic series and copolymer series petroleum resins obtained by homo- or copolymerizing one species or two or more species of compounds, which are aliphatic olefins and diolefins in C4 to C10, aromatic compounds in C8 or greater having an olefinic unsaturated bond obtained from byproducts due to pyrolysis and the like of naphtha, and included among them.

As petroleum resins, there are, for instance, aliphatic series petroleum resins having the C5 fraction as the main raw material, aromatic series petroleum resins having the C9 fraction as the main raw material, copolymer series petroleum resins thereof and alicyclic series petroleum resins. Terpene resins and terpene-phenol resins from β-pinene can be cited as terpene resins, and in addition, rosin resins such as gum rosin and wood rosin, esterified rosin resins, which have been modified with glycerin or pentaerythritol, and the like, can be cited as rosin series resins.

Alicyclic saturated hydrocarbon resins and modified bodies thereof demonstrate relatively satisfactory compatibility when mixed in polyethylene. From the aspects of color tone and thermostability, petroleum resins are more desirable, and using hydrogenated petroleum resins is further desirable.

Here, hydrogenated petroleum resins are those obtained by hydrogenating petroleum resins by commonly used methods. For instance, hydrogenated aliphatic series petroleum resins, hydrogenated aromatic series petroleum resins, hydrogenated copolymer series petroleum resins and hydrogenated alicyclic series petroleum resins, as well as hydrogenated terpene series resins, may be cited.

Among the hydrogenated petroleum resins, hydrogenated alicyclic series petroleum resins comprising cyclopentadiene series compound and aromatic vinyl series compound that have been copolymerized and hydrogenated are particularly desirable.

As commercially available hydrogenated petroleum resins, "ARKON" (manufactured by Arakawa Chemical Industries, Ltd.), and the like, may be cited.

The ethylene series copolymers described above are compounds obtained by copolymerizing ethylene and one species or more among vinyl acetate, unsaturated carboxylic acid, unsaturated carboxylic acid anhydride or carboxylate ester, and the like.

For such an ethylene series copolymer, the content percentage of ethylene monomer unit is preferably 50% by mass or greater, all the more preferably 60% by mass or greater, and further preferably 65% by mass or greater. Meanwhile, regarding the upper limit, it is desirable that the content percentage of the ethylene monomer unit is preferably 95% by mass or less, all the more preferably 90% by mass or less, and further preferably 85% by mass or less. If the content percentage of ethylene monomer unit is within a predetermined range, porous structures can be formed more effectively.

For the ethylene series copolymers, those with MFR (JIS K721 0; temperature: 190°C; load: 2.16 kg) of 0.1 g/10 minutes or greater but 10 g/10 minutes or lower are used suitably. If the MFR is 0.1 g/10 minutes or greater, extrusion processability can be maintained satisfactorily, while if MFR is 10 g/10 minutes or lower, a reduction in the strength of the film is unlikely to occur, which is desirable.

As the ethylene series copolymers, for instance, "EVAFLEX" (manufactured by Du Pont-Mitsui Polychemicals Co., Ltd.) and "NOVATEC EVA" (manufactured by Japan polyethylene Corporation) as ethylene-vinyl acetate copolymers, "NUC co-polymer" (manufactured by Nippon Unicar Company Limited), EVAFLEX-EAA (manufactured by Du Pont-Mitsui Polychemicals Co., Ltd.) and "REXPEARL EAA" (manufactured by Japan ethylene Corporation) as ethylene-acrylic acid copolymers, "ELVALOY" (manufactured by Du Pont-Mitsui Polychemicals Co., Ltd.) and "REXPEARL EMA" (manufactured by Japan ethylene Corporation) as ethylene-(meth)acrylic acid copolymers, "REXPEARL EEA" (manufactured by Japan ethylene Corporation) as ethylene-ethyl acrylate copolymer, "ACRYFT" (manufactured by Sumitomo Chemical Co., Ltd.) as ethylene-methyl (meth) acrylate copolymer, "BONDINE" (manufactured by Sumitomo Chemical Co., Ltd.) as ethylene-vinyl acetate-maleic anhydride terpolymers, "BONDFIRST" (manufactured by Sumitomo Chemical Co., Ltd.) as ethylene-glycidyl methacrylate copolymer, ethylene-vinyl acetate-glycidyl methacrylate terpolymer, ethylene-ethyl acrylate-glycidyl methacrylate terpolymer, and the like, can be cited as ones that can be acquired commercially.

The waxes mentioned above refer to organic compounds that fulfill the properties (i) and (ii) below:

(i) The melting point is 40°C to 200°C.
(ii) The molten viscosity at a temperature that is 10°C higher than the melting point is 50 Pa·s or lower.

As waxes, polar or nonpolar waxes, polypropylene waxes, polyethylene waxes and wax modifiers are included. Concretely, polar waxes, nonpolar waxes, Fischer-Tropsch waxes, oxidized Fischer-Tropsch waxes, hydroxystearamide waxes, functionalized waxes, polypropylene waxes, polyethylene waxes, wax modifiers, amorphous waxes, carnauba waxes, castor oil waxes, microcrystalline waxes, beeswax, castor waxes, vegetable waxes, candelilla waxes, Japanese waxes, ouricury waxes, Douglas fir bark waxes, rice bran waxes, jojoba waxes, bayberry waxes, montan waxes, ozokerite waxes, ceresin waxes, petroleum waxes, paraffin waxes, chemically modified hydrocarbon waxes, substitutional amide waxes, and combinations and derivatives thereof may be cited.

Among them from the point of allowing porous structures to be formed effectively, paraffin waxes, polyethylene waxes and microcrystalline waxes are desirable, and from the point of view of SD characteristics, microcrystalline waxes, which allow the pore size to be further miniaturized are further desirable.

"FT-115" (manufactured by Nippon Seiro Co., Ltd.) as commercially available polyethylene waxes, and "Hi-Mic" (manufactured by Nippon Seiro Co., Ltd.) as microcrystalline waxes, and the like, may be cited.

For the mixing amount of the porositization-promoting compound X, 1 part by mass or greater is desirable, 5 parts by mass or greater is all the more desirable, and 10 parts by mass or greater is further desirable, with respect to 100 parts by mass of polyethylene contained in one layer, when micropores are formed by detaching the interface between polyethylene and the porositization-promoting compound X. Meanwhile, as the upper limit, 50 parts by mass or less is desirable, in particular 40 parts by mass or less is all the more desirable, and 30 parts by mass or less is further desirable. If the mixing amount of the porositization-promoting compound X with respect to 100 parts by mass of polyethylene is 1 part by mass or greater, the aimed effects manifested by a satisfactory porous structure are sufficiently obtained. In addition, if the mixing amount of the porositization-promoting compound is 50 parts by mass or less, more stabilized molding ability can be secured.

(Other constituents)

As necessary, aside from polyethylene and porositization-promoting compounds X, compounds called rubber constituents such as thermoplastic resin and thermoplastic elastomer may be added to extents that are not detrimental to the thermal properties, concretely, porositization, of the porous film.

Elsewhere, the B layer may contain an additive generally mixed into a resin composition, or another constituent. As these additives, additives such as recycled resins generated from trimming losses such as edges, silica, talc, kaolin, inorganic particles such as calcium carbonate, titanium oxide, pigments such as carbon black, fire retardant, weather-resistance stabilizer, heat-resistance stabilizer, anti-static agent, molten viscosity improver, cross-linking agent, lubricant, nucleating agent, plasticizer, anti-aging agent, oxidation inhibitor, light stabilizer, ultraviolet light absorbent, neutralization agent, anti-clouding agent, anti blocking agent, slipping agent or colorants may be cited

Among them, nucleating agents are desirable, as they have the effects of controlling the crystal structure of polyethylene, refining the porous structure at the time of pore-opening by stretching.

<Morphology of the present porous film>

The morphology of the present porous film may be either planar or tubular. For instance if planar, productivity is adequate since multi-sheet collection is possible as a product in the width direction, and furthermore, it is desirable from the point of view that treatments such as coating to the internal face can be possible.

<Production method for the present porous film>

In the following, production methods for the present porous film will be described. However, the production method for the present porous film is not limited to the production method described in the following.

The production method for the pore-free film-shaped object can use well-known methods, without being limited in particular. For instance, a method may be cited, whereby, using an extruder, a thermoplastic resin composition is melted, extruded from a T-die and solidified by cooling with a cast rolls. In addition, a method can also be applied, whereby a film-shaped object produced by a tubular method is cut open and planarized.

Regarding stretching methods for the pore-free film-shaped object, there are techniques such as roll drawing method, rolling method, tenter stretching method and simultaneous biaxial stretching method, and it suffices to carry out uniaxial stretching or biaxial stretching with these, alone or by combining two or more. Among these, from the point of view of porous structure control, adopting successive biaxial stretching is desirable.

In addition, when turning the present porous film into a laminate, dividing roughly into the following four types is possible according to the sequence of porositization and layering:

(a) Methods whereby, after each layer has been porositized, the porositized each layer is layered by being laminated or adhered with an adhesive or the like.
(b) Methods whereby each layer is layered to fabricate a layered pore-free film-shaped object, and then, the pore-free film-shaped object is porositized.
(c) Methods whereby any one layer among each of the layers is porositized, then, layered with another layer of pore-free film-shaped object, and porositized.
(d) Methods whereby a porous layer is fabricated, and then, application of a coating of inorganic/organic particle or the like, vapor deposition of metal particle, or the like, is carried out for layering.

In the production of the present porous film, from the points of view of simplicity and productivity of the process thereof, using the methods of (b) is desirable, and above all, in order to secure the inter-layer adhesive property of two layers, the methods whereby a layered pore-free film-shaped object is fabricated by co-extrusion and then porositized is particularly desirable.

Hereafter, the production methods will be described in detail.

First, a mixed resin composition of polypropylene series resin, if necessary thermoplastic resin, and additive is prepared. For instance, raw materials such as polypropylene series resin, β-crystal nucleating agent, and other additives as desired are mixed preferably using a Henschel mixer, a super mixer, a tumbler-type mixer or the like, or by placing all the constituents in to a bag and hand-blending, then, melt-kneaded with a single screw or a twin screw extruder, a kneader or the like, preferably a twin screw extruder, and then cut to obtain a pellet.

The pellet is introduced into an extruder, and extruded from a T-die extrusion mouth to mold a film-shaped object. The type of T-die is not limited in particular. For instance, when the present porous film adopts a layered structure of two species and three layers, it does not matter that the T-die is a multi-manifold type for two species and three layers, or that it is a feed block-type for two species and three layers.

While the T-die gap to be used is determined by the thickness of the film ultimately needed, the stretching conditions, the draft rate, various conditions and the like, it is in general on the order of 0.1 to 3.0 mm, and preferably 0.5 to 1.0 mm. At less than 0.1 mm, it is not desirable from the point of view production speed, and in addition, if greater than 3.0 mm, it is not desirable from the point of view of production stability as the draft rate becomes greater.

In the extrusion-molding, it is desirable to adjust the extrusion process temperature suitably according to the flowing properties, molding ability, and the like, of the resin composition. Roughly 180 to 350°C is desirable, 200 to 330°C is all the more desirable, and 220 to 300°C is further desirable. If the extrusion process temperature is 180°C or higher, it is desirable from the fact that the viscosity of the molten resin is sufficiently low with excellent molding ability, increasing productivity. Meanwhile, by being at 350°C or lower, degradation of the resin composition and consequently a decrease in the mechanical strength of the obtained polypropylene series resin porous film can be suppressed.

The temperature of the cast rolls, that is to say, the cooling-solidification temperature, is preferably 80 to 150°C, all the more preferably 90 to 140°C, and even more preferably 100 to 130°C. By being in the defined temperature range, such trouble as the extruded molten resin adheres and winds onto the cast roll is unlikely to occur, allowing the resin to be turned into a film-shaped object efficiently, which is desirable. In addition, in a film-shaped object having β-crystal activity, as the ratio of β-crystals can be increased sufficiently, allowing sufficient porosity to be obtained, it is desirable.

It is desirable that the β-crystal ratio in the polypropylene series resin of the film-shaped object prior to stretching is adjusted to 30 to 100% by setting the cast rolls to the temperature range described above. All the more desirable is 40 to 100%, further desirable is 50 to 100%, and most desirable is 60 to 100%. By having the ratio of β-crystals in the film-shaped object prior to stretching at 30% or greater, porositization is facilitated in the subsequent stretching operation, allowing a polypropylene series resin porous film having adequate air-permeating properties to be obtained.

The β-crystal ratio in the film-shaped object prior to stretching can be calculated by the formula below, using the crystalline melting heat derived from the α-crystals ($\Delta Hm\alpha$) and the crystalline melting heat derived from the β-crystals ($\Delta Hm\beta$) of the polypropylene series resin (A) that are detected when the film-shaped object is raised in temperature from 25°C to 240°C at a heating rate of 10°C/minute using a differential scanning calorimeter.

$$\text{β-crystal ratio (\%)} = [\Delta Hm\beta/(\Delta Hm\beta + \Delta Hm\alpha)] \times 100$$

In the stretching process, uniaxially stretching in the longitudinal direction or the transversal direction is adequate, and biaxially stretching is also adequate. In addition, when carrying out biaxial stretching, simultaneous biaxial stretching is adequate, and successive biaxial stretching is also adequate.

When fabricating the present porous film, it is all the more desirable to select the stretching conditions at each stretching process, and adopt successive biaxial stretching, in which controlling the porous structure is facilitated.

The longer direction of film-shaped object and film is termed "longitudinal", and the perpendicular direction with respect to the longer direction is termed "transversal". In addition, stretching in the longer direction is termed "longitudinal stretching", and stretching in the perpendicular direction with respect to the longer direction is termed "transversal stretching".

When carrying out successive biaxial stretching, it is desirable to select the stretching temperature at suitable times according to the composition of the resin composition, crystal-melting peak temperature of the thermoplastic resin, the degree of crystallinity of the polypropylene, and the like. Selecting within the range of conditions described below is desirable.

Controlling the stretching temperature in longitudinal stretching in a range of roughly 20°C to 130°C, of which 40°C to 120°C, whereof in particular 60°C to 110°C is desirable. If the stretching temperature in longitudinal stretching is 20°C or higher, rupture during longitudinal stretching being unlikely to occur, formation of void origins is carried out, which is thus desirable. Meanwhile, if the stretching temperature in longitudinal stretching is 130°C or lower, void formation occurs inside polypropylene, thus allowing appropriate hole formation to be carried out.

In addition, the longitudinal stretch ratio is preferably 2.0 to 10.0-fold, all the more preferably 2.5 to 8.0-fold, and further preferably 3.0 to 6.0-fold. A longitudinal stretch ratio of 2.0-fold or greater allows void origins to be formed. Meanwhile, a longitudinal stretch ratio of 10.0-fold or less allows the rupture frequency during stretching to be reduced, while at the same time reduces the residual strain of the obtained film such that also at heating, there is only small film shrinking/shrinking stress, and thus, as a result, leading to a reduction of change in air-permeability under high temperature environment. From the points of view of formation of void origins and thermal stability, the longitudinal stretch ratio is most preferably 3.0 to 4.5-fold.

Controlling the stretching temperature in transversal stretching in a range of roughly 100°C to 160°C, of which 110°C to 150°C, whereof 120°C to 145°C, is desirable. If the stretching temperature in the transversal stretching is in the range described above, rupture during transversal stretching is unlikely to occur due to softening of polypropylene, in addition, the void origins formed by longitudinal stretching become more readily open, thus, as a result, a biaxially stretched film having high porosity can be obtained.

In addition, transversal stretch ratio is preferably 1.1 to 8.0-fold, all the more preferably1.5 to 6.0-fold, and further preferably 2.0 to 4.0-fold. By having a transversal stretch ratio of 1.1-fold or greater, the void origins formed by longitudinal stretching can be expanded to a suitable size, allowing a biaxially stretched film having a dense porous structure to be obtained. By having a transversal stretch ratio of 8.0-fold or less, the rupture frequency during stretching can be reduced.

In so doing, by lowering the transversal stretch ratio, the molecular orientation in the transversal direction of polypropylene become small, residual strain of the obtained film is low, therefore, also at heating, there are only small film shrinking and change in porous structure. As a result, this leads to a reduction of the change in air-permeability under high temperature environment, which is thus desirable. In addition, from the points of view of hole expansion and thermal stability, the transversal stretch ratio is most preferably 3.0-fold or less.

As the stretching speed of the stretching process, 100 to 10,000%/minute is desirable, in particular 200 to 5,000%/minute is all the more desirable, of which 500 to 2,000%/minute is further desirable. A stretching speed in this range, the present porous film can be produced efficiently.

With the purpose of thermal shrinkage reduction, it is desirable to perform a heat-treatment on the porous polypropylene film obtained in this manner. In so doing, by setting the temperature to 130°C or higher, crystallization of polypropylene is promoted along with the residual strain of the film that occurred by stretching being reduced, such that an effect of thermal shrinkage reduction can be anticipated, and consequently, the change in air-permeability under high temperature environmental can be reduced. Meanwhile, a heat-treatment temperature of 160°C or lower is desirable, and 155°C or lower is further desirable. With a heat-treatment temperature of 160°C or lower, melt-softening of polypropylene does not occur more than necessary, allowing the porous structure of the film to be maintained, which is thus desirable.

During the heat-treatment process, a 1 to 20% relaxation treatment may be performed as necessary, and a relaxation treatment may be performed after carrying out heat-treatment in a constrained state to promote crystallization. After the heat-treatment, slow-cooling uniformly allows an all the more desirable present porous film to be obtained.

In addition, by aging the obtained film, it can become a film with an even higher thermal stability. The temperature for aging is preferably 20 to 100°C, all the more preferably 30 to 80°C, and further preferably 40 to 60°C. The duration of aging depends on the temperature. Preferably 1 to 100 hours and all the more preferably 1 to 24 hours are desirable in terms of production. By carrying out aging in the range described above, the low temperature residual strain of the film can be removed, and changes overtime at low temperature can be reduced, which is desirable.

<Application of the present porous film>

Next, an example in which the present porous film is used as a battery separator to constitute a battery will be described as an example of application of the present porous film.

(Battery)

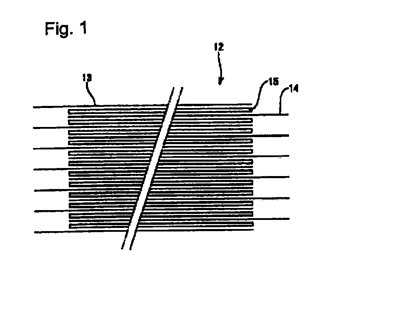

Here, a lithium ion battery containing the present porous film as a lithium ion battery separator will be described while referring to Fig. 1.

A generator stack 12 has a constitution layered via a battery separator 15 between a planar positive electrode plate 13, a negative electrode plate 14, and each of the pole plates 13 and 14.

Each of the pole plates 13 and 14 is formed by coating each of the active materials for positive electrode use and negative electrode use on each side of a power collector made of metal foil, the power collector being in an exposed state at an edge on one side of each of the pole plates 13 and 14, at the exposed portion, the power collectors of the same polarity are laid over one another and sandwiched by a clamping plate having a stud bolt, secured by welding the power collectors to one another, and housed in a square battery case.

An electrolytic solution which a lithium salt has been dissolved in an organic solvent is used.

As organic solvent, there is no particular limitation. For instance, esters such as propylene carbonate, ethylene carbonate, butylene carbonate, γ-butyrolactone, γ-valerolactone, dimethyl carbonate, methyl propionate or butyl acetate, nitriles such as acetonitrile, ethers such as 1,2-dimethoxy ethane, 1,2-dimethoxy methane, dimethoxy propane, 1,3-dioxolane, tetrahydrofuran, 2-methyl tetrahydrofuran or 4-methyl-1,3-dioxolane, or sulfolane and the like may be cited, and these can be used alone or by mixing two species or more.

Among them, an electrolyte in which a lithium hexafluorophosphate ($LiPF_6$) has been dissolved at a proportion of 1.0 mol/L in a solvent comprising 2 parts by mass of methylethyl carbonate mixed with respect to 1 part by mass of ethylene carbonate, is desirable.

Alkaline metal or a compound containing alkaline metal integrated with a power collection material such as a stainless steel mesh is used as negative electrode.

As the alkaline metal, for instance lithium, sodium or potassium, and the like, may be cited.

As the compound containing alkaline metal, for instance, an alloy between an alkaline metal and aluminum, lead, indium, potassium, cadmium, tin, magnesium or the like, furthermore, a compound between an alkaline metal and a carbon material, a compound between a low potential alkaline metal and a metal oxide or sulfide, and the like, may be cited.

When using a carbon material in the negative electrode, as carbon material, one that allows lithium ion doping and dedoping is adequate, and for instance, graphite, pyrolytic carbons, cokes, glassy carbons, burned bodies of organic macromolecular compounds, mesocarbon micro beads, carbon fibers, activated charcoal and the like can be used.

In the present embodiment, a carbon material with an average particle size of 10 μm mixed to a solution comprising vinylidene fluoride dissolved in N-methyl pyrrolidone turned into a slurry, this negative electrode mixture slurry having been passed through a 70-mesh net to remove large particles, then, uniformly coated and dried on both sides of a negative electrode power collector consisting of a copper foil plate of 18 μm in film thickness, thereafter, compression molded with a roll press and then cut into a plate of negative electrode plate, is used as the negative electrode.

A metal oxide such as lithium cobalt oxide, lithium nickel oxide, lithium manganese oxide, manganese dioxide, vanadium pentoxide or chromium oxide, a metal sulfide such as molybdenum disulfide, and the like, being used as active materials, a mixture comprising a conductive auxiliaries and a binding agent, or the like, such as polytetrafluoroethylene, suitably added to these positive electrode active materials, which has been finished as a molded body with a power collection material such as stainless steel mesh as a core, is used as positive electrode.

In the present embodiment, a plate of positive electrode plate fabricated in the manner described below is used as positive electrode. That is to say, flake graphite is added as conductive auxiliaries and mixed with lithium cobalt oxide ($LiCoO_2$) at a mass ratio (lithium cobalt oxide:flake graphite) of 90:5, this mixture and a solution comprising polyvinylidene fluoride dissolved in N-methyl pyrrolidone are mixed to be turned into a slurry. This positive electrode mixture slurry is passed through a 70-mesh net to remove large particles, then, uniformly coated and dried on both sides of a positive electrode power collector consisting of a 20 μm-thick aluminum foil, thereafter, compression molded with a roll press and then cut into a plate of positive electrode plate.

<Explanation of terms>

In the present invention, when the expression "main component" is used, unless expressly mentioned, it includes the meaning of allowing other constituents to be contained to an extent that does not impede the functions of the main component, and does not specify in particular the proportion of the main component contained. It includes the meaning that the main component occupies 50% by mass or greater within the composition, preferably 70% by mass or greater, and particularly preferably 90% by mass or greater (including 100%).

When the statement "X to Y" (X and Y are any numbers) is used, unless expressly stated otherwise, along with the meaning "X or greater but Y or lower", the meanings "preferably larger than X" and "preferably smaller than Y" are included.

In addition, also when the statement "X or greater" or "Y or less" (X and Y are any numbers) is used, unless expressly stated otherwise, the meanings "preferably larger than X" and "preferably smaller than Y" are included.

[Examples]

Hereafter, the porous polypropylene film according to the present invention will be described in further detail by indicating examples and comparative examples. However, the present invention is not to be limited to these.

The feed (flow) direction of the porous polypropylene film will be described as "longitudinal" direction, and the perpendicular direction thereto as "transversal" direction.

(Examples 1 to 3, Comparative Examples 1 to 3)

To 100 parts by mass of homopolypropylene "PrimePP F300SV (product name) " (MFR: 3.0 g/10 minutes) manufactured by Prime Polymer Co., Ltd., 0.2 parts by mass of the β-crystal nucleating agent 3,9-bis[4-(N-cyclohexylcarbamoyl)phenyl]-2,4,8,10-tetraoxaspiro[5.5] undecane was added, then, using a co-rotating twin screw extruder (manufactured by The Japan Steel Works, LTD.; port diameter: 54 mmØ; L/D = 40), melt-kneading at a setting temperature of 270°C extruded from a strand die, then, the strand was cooled in water at 30°C, pelletized with a cutter to obtain a polypropylene resin composition A1 pellet.

Next, from the polypropylene resin composition A1 that was melt-mixed at 200°C and then extruded with a T-die using a single-screw extruder (manufactured by Mitsubishi Heavy Industries, Ltd.; port diameter; 40 mmØ; UD = 32), a molten resin sheet was fed to cast rolls having the surface temperatures mentioned in Table 1 and solidified by cooling to obtain a film-shaped object. In so doing, the contact time between the molten resin sheet and the cast rolls was 15 seconds.

Next, using a roll longitudinal stretching machine, stretching was carried out between the rolls longitudinally at stretching temperatures and stretch ratios mentioned in Table 1 on the obtained film-shaped object which was then transversally stretched at stretching temperatures and stretch ratios mentioned in Table 1 with a film tenter equipment. In so doing, the preheating temperature prior to stretching was the same temperature as the stretching temperature, and the stretching speed during transversal stretching was 500%/min. After heating further at the heat-treatment temperatures mentioned in Table 1, heat relaxation treatment was carried out to obtain a porous polypropylene film.

(Example 4)

Separately from the polypropylene resin composition A1, a polyethylene resin composition B1 was fabricated by introducing 80 parts by mass of high density polyethylene (manufactured by Prime Polymer Co., Ltd.; Hi-ZEX3300F; density: 0.950 g/cm$^3$; MFR: 1.1 g/10 minutes) serving as polyethylene and 20 parts by mass of microcrystalline wax (manufactured by Nippon Seiro Co., Ltd.; Hi-Mic1090) into the co-rotating twin screw extruder, which were melt-kneaded at a setting temperature of 230°C and processed into pellets.

Next, after melt-mixing at 200°C using two units of the single-screw extruder, a molten resin sheet co-extruded from a multilayer T-die was fed to cast rolls having the surface temperatures mentioned in Table 1 and solidified by cooling to obtain a layered film-shaped object. In so doing, the contact time between the molten resin sheet and the cast rolls was 15 seconds.

Next, using a roll longitudinal stretching machine, stretching was carried out between the rolls longitudinally at stretching temperatures and stretch ratios mentioned in Table 1 on the obtained film-shaped object, and then the obtained film-shaped object was transversally stretched at stretching temperatures and stretch ratios mentioned in Table 1 with a film tenter equipment. In so doing, the preheating temperature prior to stretching was the same temperature as the stretching temperature. After heating further at the heat-treatment temperatures mentioned in Table 1, heat relaxation treatment was carried out to obtain a porous polypropylene film.

[Table 1]

| Fabrication conditions | | Example 1 | Example 2 | Example 3 | Example 4 | Comparative example 1 | Comparative example 2 | Comparative example 3 |
|---|---|---|---|---|---|---|---|---|
| Cast roll temperature | °C | 125 | 125 | 125 | 125 | 130 | 120 | 125 |
| Longitudinal stretching temperature | °C | 105 | 105 | 95 | 105 | 105 | 90 | 95 |
| Longitudinal stretching ratio | folds | 3.5 | 4.5 | 4.0 | 4.0 | 5.0 | 5.0 | 6.0 |
| Transversal stretching temperature | °C | 145 | 145 | 140 | 145 | 145 | 120 | 120 |
| Transversal stretching ratio | folds | 2.3 | 2.1 | 4.0 | 2.3 | 2.1 | 6.0 | 2.0 |
| Heat treatment temperature | °C | 155 | 155 | 145 | 155 | 155 | 150 | 150 |
| Relaxation temperature | °C | 155 | 155 | 145 | 155 | 155 | 150 | 105 |
| Relaxation rate | % | 6 | 9 | 5 | 6 | 6 | 3 | 5 |

Measurements and evaluations of various properties were carried out for the obtained porous polypropylene films in the following manner, which results are compiled in Table 2.

(1) Film-thickness

Thickness was measured at 10 locations non-specifically in the porous polypropylene film plane with a 1/1,000 mm dial gauge, and the mean value thereof served as the film thickness.

(2) Porosity

Porosity is a number representing the proportion of the space portion in the porous polypropylene film. The actual mass W1 of the porous polypropylene film was measured, the mass W0 at 0% porosity was calculated from the density and the film-thickness of the resin composition, and from these values, porosity was calculated based on the following formula:

$$\text{Porosity } Pv \text{ (\%)} = \{(W0-W1)/W0\} \times 100$$

(3) Air-permeability ($Pa_1$) at 20°C

According to JIS P8117, air-permeability (seconds/100 ml) was measured under an environment at 20°C.

(4) Air-permeability ($Pa_2$) after one-hour heating at 95°C

A porous polypropylene film was cut out to a square of 100 mm vertically x 100 mm horizontally, placed into a preheated baking tester (manufactured by DAIEI KAGAKU SEIKI MFG. co., ltd.; DK-1 M), and heating at 95°C for one hour was carried out. Air-permeability (seconds/100 ml) of the film, which was removed and cooled, was measured to according to JIS P8117.

(5) Ratio of change in air permeability

The ratio of change in air permeability was calculated from the air-permeabilities $Pa_1$ and $Pa_2$ according to the formula below, which was evaluated as follows:

$$\text{Ratio of change in air permeability (\%)} = (Pa_2/Pa_1) \times 100$$

[O (circle)]:    the ratio of change in air permeability is 120% or less
[× (cross)]:    the ratio of change in air permeability exceeds 120%

(6) Shrink rates $S_{MD}$ and $S_{TD}$ after heating at 95°C for one hour

A porous polypropylene film was cut out to a square of 100 mm vertically x 100 mm horizontally, placed into a preheated baking tester (manufactured by DAIEI KAGAKU SEIKI MFG. co., ltd.; DK-1 M), and heating at 95°C for one hour was carried out. Measurements of the dimension L0 of the film prior to heating and the dimension L1 of the film after heating were carried out, the shrink rates $S_{MD}$ and $S_{TD}$ in MD and TD after heating at 95°C for one hour were determined according to the formula below, and evaluated as follows:

$$\text{Shrink rate (\%)} = \{(L0-L1)/L0\} \times 100$$

[O (circle)]:    shrink rate is 5% or less
[× (cross)]:    shrink rate exceeds 5%

In addition, the sum between the $S_{MD}$ and the $S_{TD}$ was calculated, and evaluated as follows:

[O (circle)]: the sum between the $S_{MD}$ and the $S_{TD}$ is 5% or less

[× (cross)]: the sum between the $S_{MD}$ and the $S_{TD}$ exceeds 5%

(7) Differential scanning calorimetry (DSC)

For the porous polypropylene film, the temperature was raised from 25°C to 240°C at at scanning speed of 10°C/minute then retained for one minute, next, the temperature was lowered to 240°C to 25°C at a scanning speed of 10°C/minute then retained for one minute, next, the temperature was raised again from 25°C to 240°C at a scanning speed of 10°C/minute, using a differential scanning calorimeter (DSC-7) manufactured by Perkin-Elmer.
According to whether or not a peak was detected at 145 to 160°C, which is the crystal-melting peak temperature (Tmβ) derived from a β-crystal of polypropylene, during this re-rise in temperature, the presence or absence of β-crystal activity was assessed and evaluated with the following criteria:

[O (circle)]: if Tmβ was detected within the range of 145°C to 160°C (presence of β-crystal activity)

[× (cross)]]: if Tmβ was not detected within the range of 145°C to 160°C (no β-crystal activity).

Measurement of the β-crystal activity was carried out with a sample amount of 10 mg under nitrogen atmosphere.

(8) Wide-angle X-ray diffraction measurement (XRD)

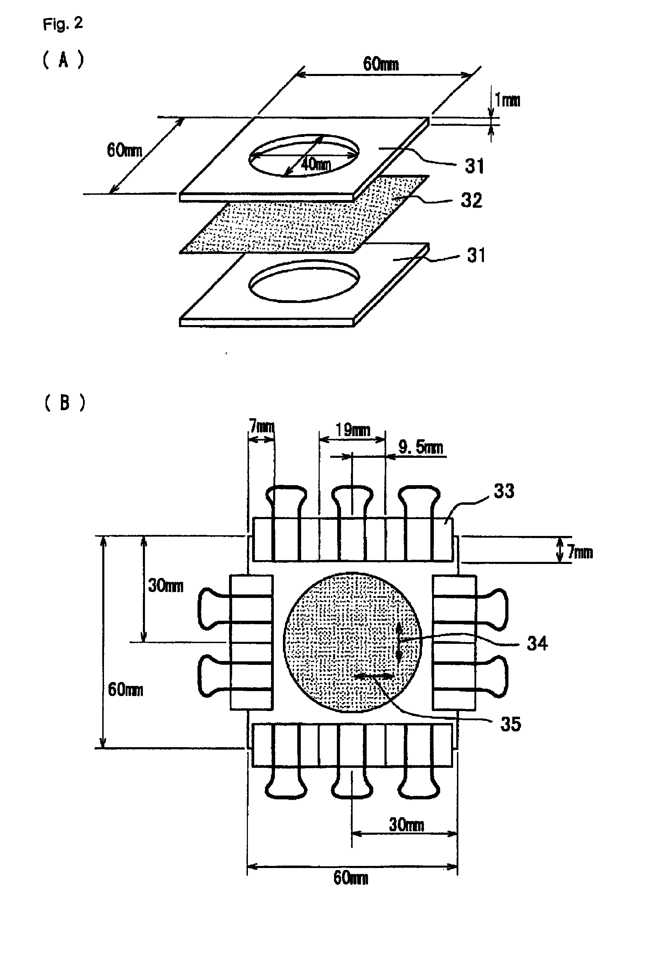

A porous polypropylene film was cut out into a square of 60 mm vertically and 60 mm horizontally, and sandwiched between two aluminum plates (material: JIS A5052; size: 60 mm vertical, 60 mm horizontal; thickness: 1 mm) which center had a hole open in the shape of a 40 mmØ circle as shown in Fig. 2 (A), and the periphery was secured with clips as shown in Fig. 2 (B).
The porous polypropylene film in a constrained state by two aluminum plates was introduced into a programmable mechanical convection oven (manufactured by Yamato Scientific Co., Ltd., Model: DKN602) at a setting temperature of 180°C and a display temperature of 180°C, retained for three minutes, then, the setting temperature was changed to 100°C, and slow cooling was carried out to 100°C over 10 minutes or longer time. At the time point where the display temperature became 100°C, the porous polypropylene film taken out, and for the porous polypropylene film obtained by cooling under 25°C atmosphere for 5 minutes still in a constrained stated by two aluminum plates, wide-angle X-ray diffraction measurement was carried out for the central 40 mmØ circular portion, with the following measurement conditions:
Wide-angle X-ray diffractometer: manufactured by Mac Science; Model No.: XMP18A
X-ray source: CuKα beam; output: 40kV, 200mA
Scanning method: 2θ/θ scan, 2θ range: 5° to 25°; scanning interval: 0.05°; scanning speed: 5°/min

For the obtained diffraction profile, the presence or absence of β-crystal activity was assessed and evaluated from the peak derived from the (300) plane of a β-crystal of polypropylene, as follows:

[O (circle)]: if a peak was detected in a range of 2θ = 16.0 to 16.5° (presence of β activity)

[× (cross)]: if a peak was not detected in a range of 2θ = 16.0 to 16.5° (no β activity)

If the film piece cannot be cut out into a square of 60 mm vertically and 60 mm horizontally, adjustments may be made so that the porous film is placed in the center in the 40 mmØ circular hole.
[Table 2]

| Evaluation items | | Example 1 | Example 2 | Example 3 | Example 4 | Comparative example 1 | Comparative example 2 | Comparative example 3 |
|---|---|---|---|---|---|---|---|---|
| Film thickness | μm | 17 | 17 | 21 | 17 | 17 | 15 | 25 |
| Porosity | % | 53 | 56 | 58 | 55 | 56 | 49 | 50 |

(continued)

| Evaluation items | | Example 1 | Example 2 | Example 3 | Example 4 | Comparative example 1 | Comparative example 2 | Comparative example 3 |
|---|---|---|---|---|---|---|---|---|
| Air-permeability $Pa_1$ | seconds/ 100 ml | 221 | 232 | 308 | 689 | 149 | 682 | 339 |
| Air-permeability $Pa_2$ | seconds/ 1 00 ml | 240 | 255 | 339 | 730 | 184 | 847 | 427 |
| Rate of change in air-permeability | % | 109 ○ | 110 ○ | 110 ○ | 106 ○ | 124 × | 124 × | 126 × |
| Shrink rate $S_{MD}$ | % | 2.5 ○ | 4.1 ○ | 3.1 ○ | 0.2 ○ | 6.5 × | 2.6 ○ | 8.5 × |
| Shrink rate $S_{TD}$ | % | 0.7 ○ | 0.7 ○ | 1.5 ○ | 3.8 ○ | 0.7 ○ | 3.6 ○ | 0.0 ○ |
| $S_{MD} + S_{TD}$ | % | 3.2 ○ | 4.8 ○ | 4.6 ○ | 4.0 ○ | 7.2 × | 6.1 × | 8.6 × |
| β-crystal | DSC | ○ | ○ | ○ | ○ | ○ | ○ | ○ |
| activity | XRD | ○ | ○ | ○ | ○ | ○ | ○ | ○ |

The porous polypropylene films obtained in Examples 1 to 4, in which the ratio of change in air permeability is small, and in addition, the $S_{MD}$ and $S_{TD}$ are small compared to those of Comparative Examples, were found to be porous polypropylene film that are stable even under high temperature environment.

[Industrial applicability]

The porous polypropylene film proposed by the present invention has a small change in air-permeability and excellent air-permeating properties even under high temperature environment, thus can be used adequately as a separator in a lithium ion battery.

[Explanation of the keys]

12    Generator stack
13    Positive electrode plate
14    Negative electrode plate
15    Battery separator
31    Aluminum plate
32    Film
33    Clip
34    Film longitudinal direction
35    Film transversal direction

**Claims**

1. A porous polypropylene film satisfying following conditions (1) and (2) regarding air-permeability ($Pa_1$) at 20°C and air-permeability ($Pa_2$) after heating at 95°C for one hour:

   (1) $Pa_1$ is 800 seconds/100 ml or less
   (2) The ratio of change in air permeability calculated by the formula below is 120% or less

$$\text{Ratio of change in air permeability (\%)} = (Pa_2/Pa_1) \times 100$$

2. The porous polypropylene film according to claim 1, having $\beta$-crystal activity.

3. The porous polypropylene film according to claim 1 or 2, wherein after heating at 95°C for one hour, a shrink rate ($S_{MD}$) in a machine direction (MD) and a shrink rate ($S_{TD}$) in a transversal direction (TD) with respect to the MD are both 5.0% or less, and the sum of the $S_{MD}$ and the $S_{TD}$ is 5.0% or less.

4. A lithium ion battery separator comprising the porous polypropylene film according to any of claims 1 to 3.

5. A lithium ion battery, wherein the lithium ion battery separator according to claim 4 is housed.

6. A lithium ion battery, wherein the lithium ion battery according to claim 5 is of an overlay type.

Fig. 1

Fig. 2

( A )

( B )

<div align="center">

**INTERNATIONAL SEARCH REPORT**

</div>

| | International application No. |
|---|---|
| | PCT/JP2011/056344 |

| A. CLASSIFICATION OF SUBJECT MATTER |
|---|
| *C08J9/00*(2006.01)i, *H01M2/16*(2006.01)i |

According to International Patent Classification (IPC) or to both national classification and IPC

| B. FIELDS SEARCHED |
|---|
| Minimum documentation searched (classification system followed by classification symbols) |
| C08J9/00, H01M2/16 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 2009-227819 A (Toray Industries, Inc.),<br>08 October 2009 (08.10.2009),<br>claims; paragraphs [0045] to [0052]; examples<br>(Family: none) | 1-5<br>6 |
| Y | WO 2007/046226 A1 (Toray Industries, Inc.),<br>26 April 2007 (26.04.2007),<br>claims; paragraph [0004]<br>& US 2009/0219672 A1 & EP 1950821 A1<br>& CA 2625083 A & CN 101292378 A<br>& KR 10-2008-0070664 A | 6 |
| Y | JP 2008-016210 A (Sony Corp.),<br>24 January 2008 (24.01.2008),<br>claims; paragraphs [0001], [0044]<br>(Family: none) | 6 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 April, 2011 (04.04.11) | 12 April, 2011 (12.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

| | INTERNATIONAL SEARCH REPORT | International application No. |
|---|---|---|
| | | PCT/JP2011/056344 |

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2010-111096 A (Mitsubishi Plastics, Inc.), 20 May 2010 (20.05.2010), claims; paragraphs [0096] to [0098]; examples & WO 2010/053172 A1 | 1-6 |
| P,X | JP 2010-171005 A (Mitsubishi Plastics, Inc.), 05 August 2010 (05.08.2010), claims; paragraphs [0057], [0058]; examples & WO 2010/074151 A1 | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05009332 B
- JP H10050286 B
- JP 2509030 B
- JP 2002066233 A
- JP 3739481 B
- JP H04181651 B
- JP 2003306585 A
- JP H06289566 B
- JP H09194650 B

**Non-patent literature cited in the description**

- *Macromol. Chem.,* 1986, vol. 187, 643-652
- *Prog. Polym. Sci.,* 1991, vol. 16, 361-404
- *Macromol. Symp.,* 1995, vol. 89, 499-511
- *Macromol. Chem.,* 1964, vol. 75, 134
- **ZAMBELLI et al.** *Macromolecules,* 1975, vol. 8, 687